# FASCICULE DE BREVET EUROPEEN

(11) **EP 1 748 153 B1**
(45) Date de publication et mention de la délivrance du brevet: **18.09.2013**
(21) Numéro de dépôt: 06116912.4
(22) Date de dépôt: 10.07.2006
(51) Int. Cl.: F01D 5/20

(54) **Aube de turbomachine et turbomachine comprenant une telle aube**
Schaufel einer Strömungsmaschine und Strömungsmaschine mit einer solchen Schaufel
Turbomachine blade and turbomachine comprising such a blade

(30) Priorité: 26.07.2005 FR 0507925
(43) Date de publication de la demande: 31.01.2007
(73) Titulaire: SNECMA, 75015 Paris (FR)
(72) Inventeur: Boury, Jacques, 77720 SAINT OUEN EN BRIE (FR); Botrel, Erwan, 94140 ALFORTVILLE (FR)
(74) Mandataire: Intès, Didier Gérard André

(56) Documents cités:
- EP-A- 1 231 359
- GB-A- 2 155 558
- US-A- 5 261 789
- US-A1- 2004 197 190

## Description

L'invention concerne une aube de turbomachine ayant une extrémité libre comprenant une paroi d'extrémité sur laquelle fait saillie un rebord. Il peut s'agir, par exemple, d'une aube de rotor de turbine ou de compresseur d'un turboréacteur.

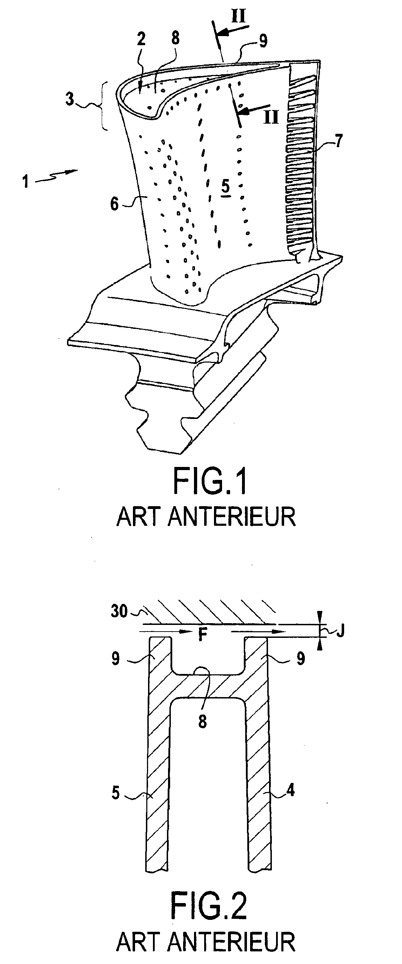

Les figures 1 et 2 représentent l'extrémité libre d'une aube 1 de rotor de turbine, de type connu. Cette aube présente à son extrémité libre 3 une cavité ouverte, ou baignoire 2, délimitée par une paroi d'extrémité 8 et un rebord 9, de contour fermé, faisant saillie à la périphérie de cette paroi. Ce rebord longe le côté d'extrados 4, le bord d'attaque 6, le côté d'intrados 5 et le bord de fuite 7 de l'aube. Les documents US 2004/197190 A1, EP-A-1231359, US-A-5261789 et GB 2155558A divulguent des aubes de ce type.

Lorsqu'elles sont montées à l'intérieur d'un turboréacteur, les aubes 1 du rotor sont entourées par un anneau 30, représenté sur la figure 2. Le rebord 9 permet de protéger la paroi d'extrémité 8 des frottements avec l'anneau 30. En outre, il permet d'optimiser le jeu J entre l'extrémité libre 3 de l'aube et l'anneau 30 de manière à limiter le passage de gaz à ce niveau.

La conception aérodynamique d'une aube de turbine veut que la distance du bord d'attaque au bord de fuite de l'aube soit plus grande du côté d'extrados que du côté d'intrados.

Les gaz passant du côté d'extrados de l'aube ayant une plus grande distance à parcourir que ceux passant du côté d'intrados, ils ont comparativement une plus grande vitesse d'écoulement. Ainsi, du côté d'extrados, les gaz exercent sur l'aube une pression plus faible que celle exercée du côté d'intrados. Il se crée ainsi un gradient de pression qui permet de faire tourner le rotor.

Ce gradient de pression est également à l'origine du passage d'un certain volume de gaz F, au niveau du jeu J, entre le rebord 9 et l'anneau 30, ces gaz F se dirigeant de l'intrados vers l'extrados. Or, ce phénomène est néfaste au rendement de la turbine car les gaz F ne travaillent pas à la rotation du rotor.

La présente invention a pour but de limiter le volume des gaz F passant de l'intrados vers l'extrados entre le rebord et l'anneau, en vue d'améliorer le rendement de la turbomachine.

Pour atteindre ce but, l'invention a pour objet une aube de turbomachine selon la revendication 1.

L'invention vise à augmenter la distance parcourue par les gaz circulant du côté d'intrados le long dudit rebord. Ces gaz sont dénommés ci-après gaz d'intrados.

Les gaz d'intrados s'écoulent le long de la partie de ladite deuxième portion située entre le bord d'attaque et la zone de raccordement, et le long de ladite première portion. La distance qu'ils parcourent du côté d'intrados est donc plus importante que celle qu'ils parcouraient avec une aube du type de celle des figures 1 et 2. Ainsi, la vitesse d'écoulement de ces gaz est plus élevée et la pression statique qu'ils exercent sur le rebord, du côté d'intrados, est plus faible. En revanche, la pression statique exercée par les gaz d'extrados est la même qu'avec une aube du type de celle des figures 1 et 2, car la distance que ces gaz parcourent le long du rebord, du côté d'extrados, reste la même.

On obtient ainsi une diminution du gradient de pression statique exercée par les gaz d'intrados et d'extrados sur le rebord, ce qui entraîne une diminution du volume des gaz passant entre ce rebord et l'anneau qui l'entoure.

L'invention et ses avantages seront mieux compris à la lecture de la description détaillée qui suit. Cette description fait référence aux figures annexées sur lesquelles :
- la figure 1 est une vue en perspective d'un exemple d'aube de type connu ;
- la figure 2 est une coupe selon le plan II-II de la figure 1 ;
- la figure 3 est une vue en perspective d'un premier exemple d'aube selon l'invention;
- la figure 4 est une coupe selon le plan IV-IV de la figure 3 ; et
- la figure 5 est une vue en perspective d'un deuxième exemple d'aube selon l'invention.

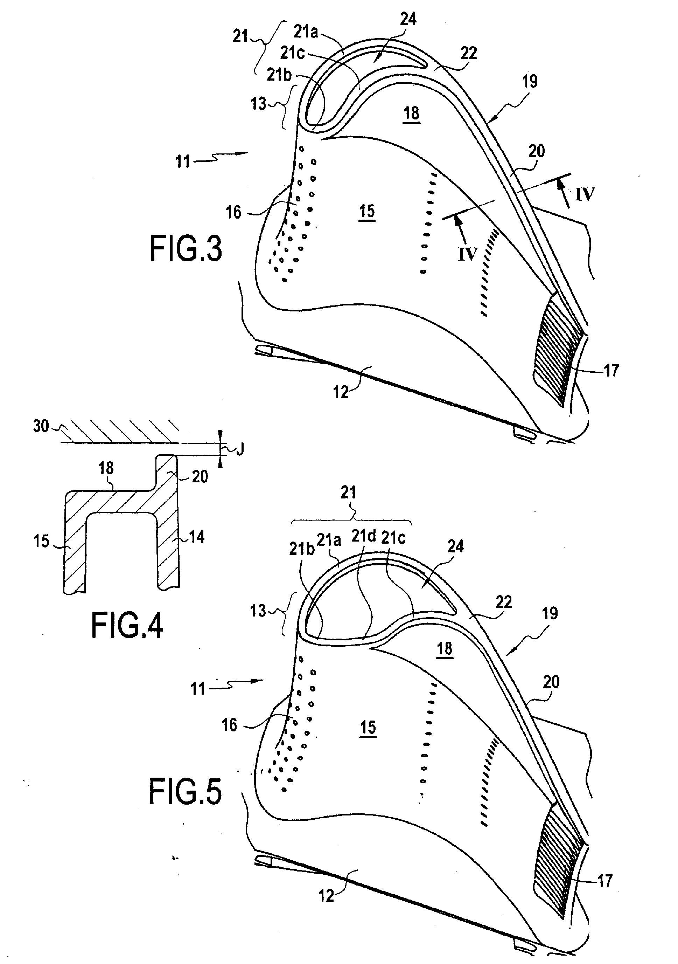

Les exemples d'aube 11 représentés sur les figures 3 à 5 sont des aubes de rotor de turbine haute pression de turbo-réacteur. Chaque aube 11 présente un pied 12 et une extrémité libre 13 opposée au pied 12. L'aube 11 est creuse de manière à pouvoir être refroidie de l'intérieur par de l'air frais. Lorsqu'elle est montée à l'intérieur d'un turboréacteur, l'aube 11 est entourée par un anneau 30, représenté sur la figure 4.

L'aube 11 a un profil aérodynamique : elle présente un bord amont arrondi, ou bord d'attaque 16, et elle s'amincit jusqu'à son bord aval, ou bord de fuite 17. Elle présente également deux côtés opposés : un côté d'extrados 14 convexe et un côté d'intrados 15 concave.

L'extrémité libre 13 de l'aube comprend une paroi d'extrémité 18 s'étendant sur toute l'extrémité de celle-ci et, sur laquelle, fait saillie un rebord 19. Ce rebord est formé de deux portions 20 et 21.

La première portion 20 part du bord de fuite 17 et longe le côté d'extrados 14 jusqu'à une zone de raccordement 22. Cette zone de raccordement 22 est une zone du rebord 19 située à la périphérie de la paroi d'extrémité 18, du côté d'extrados de l'aube, entre le bord d'attaque 16 et le bord de fuite 17. La zone de raccordement 22 est située à une distance significative du bord de fuite 17.

La deuxième portion 21 du rebord 19 comprend au moins trois segments :
- un segment d'extrados 21a qui part de la zone de raccordement 22, prolonge la première portion 20 du rebord 19 et longe le côté d'extrados 14 de l'aube ;
- un segment d'attaque 21b qui prolonge le segment d'extrados 21a et longe le bord d'attaque 16 de l'aube ; et
- un segment de raccordement 21c qui s'étend à partir du bord d'attaque 16 ou du côté d'intrados 15 de l'aube, jusqu'à la zone de raccordement 22.

Dans l'exemple de la figure 3, la deuxième portion 21 du rebord 19 est uniquement formée des trois segments 21a, 21b et 21c de sorte que le segment de raccordement 21c prolonge le segment d'attaque 21b.

Dans l'exemple de la figure 5, la deuxième portion 21 du rebord comprend un quatrième segment, dit segment d'intrados 21d, qui longe une partie du côté d'intrados de l'aube 15. Ce segment d'intrados 21d prolonge le segment d'attaque 21b et est lui même prolongé par le segment de raccordement 21c.

La première portion 20 du rebord 19, le segment d'extrados 21a, le segment d'attaque 21b et l'éventuel segment d'intrados 21d longent tous la périphérie de la paroi d'extrémité 18 de l'aube. Cette périphérie étant généralement courbe, ces parties de rebord 19 sont également courbes. Avantageusement, pour que le rebord 19 présente un profil aérodynamique, le segment raccordement 21c est également courbe.

Dans l'exemple de la figure 3, comme dans celui de la figure 5, la deuxième portion 21 du rebord 19 présente un contour fermé qui définit avec la paroi d'extrémité 18 une baignoire 24 de taille limitée par rapport aux baignoires connues jusqu'ici.

Comme expliqué plus haut, l'invention permet d'augmenter la vitesse des gaz d'intrados le long du rebord 19 en augmentant leur distance de parcours. Les gaz d'intrados circulent sur une partie du segment d'attaque 21b, sur l'éventuel segment d'intrados 21d, sur le segment de raccordement 21c, puis sur la première portion 20 du rebord 19, avant d'atteindre le bord de fuite 17.

Pour augmenter la distance de parcours de ces gaz d'intrados, on augmente la longueur de la première portion 20 du rebord 19. Dans ce but, la distance séparant la zone de raccordement 22 du bord d'attaque 16, mesurée le long du coté d'extrados 14, est inférieure à la distance séparant la zone 22 du bord de fuite 17, mesurée également le long du côté d'extrados 14.

Par ailleurs, comme l'invention vise à augmenter la vitesse d'écoulement des gaz d'intrados le long du rebord 19, il convient de guider ces gaz et de limiter les turbulences dans leur écoulement. Dans ce but, le segment de raccordement 21c joue un rôle important puisqu'il guide les gaz vers la première portion 20 du rebord 19.

Avantageusement, la zone de jonction entre le segment de raccordement 21c et la première portion 20 du rebord est courbe afin d'éviter de créer des turbulences dans l'écoulement des gaz d'intrados à ce niveau. Cette zone de jonction correspond à la partie de la zone de raccordement 22 tournée vers le côté d'intrados 15.

Avantageusement encore, de manière à bien guider les gaz tout en offrant aux gaz d'intrados une distance de parcours sur le rebord 19 suffisante, le segment de raccordement 21c et la première portion 20 du rebord 19 forment ensemble une courbe convexe vers le côté d'extrados de l'aube.

Ainsi, dans l'exemple de la figure 3, le contour fermé de la baignoire 24, matérialisé par la deuxième portion 21 du rebord 19, a la forme générale d'un ménisque ayant sa première extrémité arrondie, longeant le bord d'attaque 16 de l'aube, et sa seconde extrémité au niveau de la zone de raccordement 22.

## Revendications

1. Aube de turbomachine présentant une extrémité libre (13) comprenant une paroi d'extrémité (18) sur laquelle fait saillie un rebord (19), ce rebord comprenant : une première portion (20) partant du bord de fuite (17) de l'aube et longeant le côté d'extrados (14) de l'aube jusqu'à une zone de raccordement (22) ; et une deuxième portion (21), de contour fermé, raccordée à la première portion (20) au niveau de ladite zone de raccordement (22), cette deuxième portion (21) prolongeant la première portion (20) en longeant le côté d'extrados (14) de l'aube, longeant le bord d'attaque (16) de l'aube et rejoignant la zone de raccordement (22),
dans laquelle la deuxième portion (21) de rebord comprend un segment d'extrados (21a) longeant le côté d'extrados de l'aube; un segment d'attaque (21b) longeant le bord d'attaque (16) de l'aube, et un segment de raccordement (21c) s'étendant à partir du bord d'attaque (16) ou du côté d'intrados (15) de l'aube, jusqu'à ladite zone de raccordement (22) située du côté d'extrados (14) de l'aube,
dans laquelle la paroi d'extrémité (18), la première portion (20) et le segment de raccordement (21c) délimitent une cavité ouverte latéralement du côté d'intrados de l'aube, de sorte que les gaz circulant du côté d'intrados s'écoulent le long du segment de raccordement (21c), le long de la zone de raccordement (22), et le long de ladite première portion (20),
cette aube étant **caractérisée en ce que** la distance séparant la zone de raccordement (22) du bord d'attaque (16), mesurée le long du coté d'extrados (14), est inférieure à la distance séparant la zone de raccordement (22) du bord de fuite (17), mesurée le long du côté d'extrados (14).

2. Aube selon la revendication 1, **caractérisée en ce que** ladite deuxième portion (21) de rebord comprend, en outre, entre le segment d'attaque (21b) et le segment de raccordement (21c), un segment d'intrados (21d) qui longe une partie du côté d'intrados (15) de l'aube.

3. Aube selon la revendication 1 ou 2, **caractérisée en ce que** ladite première portion (20), ledit segment d'extrados (21a), ledit segment d'attaque (21b) et l'éventuel segment d'intrados (21d) longent la périphérie de la paroi d'extrémité (18) de l'aube.

4. Aube selon l'une quelconque des revendications 1 à 3, **caractérisée en ce que** le segment de raccordement (21c) est courbe.

5. Aube selon l'une quelconque des revendications 1 à 4, **caractérisée en ce que** la zone de jonction entre le segment de raccordement (21c) et la première portion (20) du rebord (19), est courbe.

6. Aube selon l'une quelconque des revendications 1 à 5, **caractérisée en ce que** le segment de raccordement (21c) et la première portion (20) du rebord forment ensemble une courbe convexe vers le côté d'extrados (14) de l'aube.

7. Aube de turbine de turboréacteur selon l'une quelconque des revendications précédentes.

8. Turbine comprenant une aube selon l'une quelconque des revendications 1 à 7.

9. Turbomachine comprenant une aube selon l'une quelconque des revendications 1 à 7.

## Patentansprüche

1. Schaufel einer Turbomaschine, die ein freies Ende (13) mit einer endseitigen Wand (18), an der ein Rand (19) vorspringt, aufweist, wobei dieser Rand umfaßt:
einen ersten Abschnitt (20), der von der Austrittskante (17) der Schaufel ausgeht und an der Rückseite (14) der Schaufel bis zu einem Verbindungsbereich (22) entlangläuft, sowie einen zweiten Abschnitt (21) mit geschlossener Kontur, der im Bereich des Verbindungsbereiches (22) mit dem ersten Abschnitt (20) verbunden ist, wobei dieser zweite Abschnitt (21) an der Rückseite (14) der Schaufel entlanglaufend den ersten Abschnitt (20) verlängert, an der Eintrittskante (16) der Schaufel entlangläuft und sich an den Verbindungsbereich (22) anschließt,
wobei der zweite Randabschnitt (21) ein Rückseitensegment (21 a), welches an der Rückseite der Schaufeln entlangläuft, ein Eintrittssegment (21 b), welches an der Eintrittskante (16) der Schaufel entlangläuft, sowie ein Verbindungssegment (21 c), das sich von der Eintrittskante (16) oder der Vorderseite (15) der Schaufel bis zu dem auf der Rückseite (14) der Schaufel gelegenen Verbindungsbereich (22) erstreckt, umfaßt,
wobei die endseitige Wand (18), der erste Abschnitt (20) und das Verbindungssegment (21 c) einen auf der Vorderseite der Schaufel seitlich offenen Hohlraum begrenzen, so daß die auf der Vorderseite zirkulierenden Gase entlang dem Verbindungssegment (21 c), entlang dem Verbindungsbereich (22) und entlang dem ersten Abschnitt (20) strömen,
wobei diese Schaufel **dadurch gekennzeichnet ist, daß** der entlang der Rückseite (14) gemessene Abstand zwischen dem Verbindungsbereich (22) und der Eintrittskante (16) kleiner ist als der entlang der Rückseite (14) gemessene Abstand zwischen dem Verbindungsbereich (22) und der Austrittskante (17).

2. Schaufel nach Anspruch 1, **dadurch gekennzeichnet, daß** der zweite Randabschnitt (21) ferner zwischen dem Eintrittssegment (21 b) und dem Verbindungssegment (21 c) ein Vorderseitensegment (21 d) umfaßt, das an einem Teil der Vorderseite (15) der Schaufel entlangläuft.

3. Schaufel nach Anspruch 1 oder 2, **dadurch gekennzeichnet, daß** der erste Abschnitt (20), das Rückseitensegment (21 a), das Eintrittssegment (21 b) und das mögliche Vorderseitensegment (21 d) an dem Umfang der endseitigen Wand (18) der Schaufel entlanglaufen.

4. Schaufel nach einem der Ansprüche 1 bis 3, **dadurch gekennzeichnet, daß** das Verbindungssegment (21 c) gebogen ist.

5. Schaufel nach einem der Ansprüche 1 bis 4, **dadurch gekennzeichnet, daß** der Verbindungsbereich zwischen dem Verbindungssegment (21 c) und dem ersten Abschnitt (20) des Randes (19) gebogen ist.

6. Schaufel nach einem der Ansprüche 1 bis 5, **dadurch gekennzeichnet, daß** das Verbindungssegment (21 c) und der erste Abschnitt (20) des Randes zusammen eine in Richtung der Rückseite (14) der Schaufel konvexe Krümmung bilden.

7. Schaufel einer Turbine eines Turbostrahltriebwerks, nach einem der vorhergehenden Ansprüche.

8. Turbine, die eine Schaufel nach einem der Ansprüche 1 bis 7 umfaßt.

9. Turbomaschine, die eine Schaufel nach einem der Ansprüche 1 bis 7 umfaßt.

## Claims

1. A turbomachine blade having a free end (13) comprising an end wall (18) from which there projects a rim (19), said rim comprising a first fraction (20) starting from the trailing edge (17) of the blade and running along the suction side (14) of the blade to a connection zone (22), and a second fraction (21) of closed outline connected to the first fraction (20) at the region of said connection zone (22), said second fraction (21) extending the first fraction (20), running along the suction side (14) of the blade, along the leading edge (16) of the blade, and then returning to the connection zone (22),
wherein the second fraction (21) of the rim comprises a suction-side segment (21a) running along the suction side of the blade, a leading segment (21b) running along the leading edge (16) of the blade, and a connection segment (21c) extending from the leading edge (16) or the pressure side (15) of the blade, to said connection zone (22) situated on the suction side (14) of the blade, wherein the end wall (18), the first fraction (20) and the connection segment (21c) define a cavity open laterally on the pressure side of the blade, so that gas running on the pressure side flow along the connection segment (21c), along the connection zone (22), and along the first fraction (20),
this blade being **characterized in that** the distance between the connection zone (22) and the leading edge (16), measured along the suction side (14), is shorter than the distance between the connection zone (22) and the trailing edge (17), measured along the suction side (14).

2. A blade according to claim 1, **characterized in that** said second fraction (21) of the rim further comprises, between the leading segment (21b) and the connection segment (21c), a pressure-side segment (21d) running along a portion of the pressure side (15) of the blade.

3. A blade according to claim 1 or 2, **characterized in that** said first fraction (20), said suction-side segment (21a), said leading segment (21b) and the possible pressure-side segment (21d) run along the periphery of the end wall (18) of the blade.

4. A blade according to any one of claims 1 to 3, **characterized in that** the connection segment (21c) is curved.

5. A blade according to any one of claims 1 to 4, **characterized in that** the junction zone between the connection segment (21c) and the first fraction (20) of the rim (19) is curved.

6. A blade according to any one of claims 1 to 5, **characterized in that** the connection segment (21c) and the first fraction (20) of the rim together form a curve that is convex towards the suction side (14) of the blade.

7. A turbojet turbine blade according to any preceding claim.

8. A turbine including a blade according to any one of claims 1 to 7.

9. A turbomachine including a blade according to any one of claims 1 to 7.
